(19)

Europäisches
Patentamt

European
Patent Office

Office européen
des brevets

(11) **EP 3 282 351 A1**

(12) **EUROPEAN PATENT APPLICATION**

(43) Date of publication:
**14.02.2018 Bulletin 2018/07**

(21) Application number: **16183230.8**

(22) Date of filing: **08.08.2016**

(51) Int Cl.:
*G06F 3/0488* (2013.01)  *H04L 29/08* (2006.01)
*G06F 17/24* (2006.01)  *G06F 3/0481* (2013.01)
*G06F 17/50* (2006.01)  *G06F 3/0484* (2013.01)
*G06T 9/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Premode Oy
20100 Turku (FI)**

(72) Inventors:
• **Vänskä, Aki
20780 Kaarina (FI)**
• **Lindström, Mika
21200 Raisio (FI)**

(74) Representative: **Suominen, Kaisa Liisa
Moosedog Oy
Rykmentintie 2B
20810 Turku (FI)**

Remarks:
Amended claims in accordance with Rule 137(2) EPC.

(54) **SYSTEM AND METHOD FOR FACILITATING AN INSPECTION PROCESS**

(57) Disclosed is a method for facilitating an inspection process that involves comparing a construction drawing of a given site and said site. The method comprises steps of: converting a vector graphic version of the construction drawing to a first set of raster images using a first accuracy; converting the vector graphic version of the construction drawing to a second set of raster images using a second accuracy, which second accuracy is higher than the first accuracy; dividing the first set of raster images to a first set of tiled sub-images; dividing the second set of raster images to a second set of tiled sub-images; receiving the first set of tiled sub-images and the second set of tiled sub-images by a user terminal; rendering at least one tiled sub-image, of the first set of tiled sub-images, on the user terminal; upon request to zoom the at least one tiled sub-image by a zoom rate exceeding a pre-defined threshold, rendering at least one tiled sub-image of the second set of tiled sub-images, corresponding to said at least one tiled sub-image of the first set of tiled sub-images, on the user terminal; upon request to annotate a given coordinate of a tiled sub-image, saving the annotation and its coordinate at the user terminal; and generating an inspection report comprising the annotation and its coordinate.

FIG. 5

EP 3 282 351 A1

**Description**

TECHNICAL FIELD

The present disclosure relates generally to an inspection process, and more specifically, to a system and method for facilitating an inspection process of a site by comparing a given site with a drawing of the site to generate an inspection report.

BACKGROUND

A typical process of inspecting a construction site (e.g. for building construction, shipbuilding and the like) involves gathering and organizing construction related drawings that are printed on papers. Usually, an inspector who inspects the construction site brings the construction related drawings and other documents in hard copies (e.g. on paper) and performs annotations on the drawings with a pen. This process of annotation is time consuming, tedious, and not reliable as it involves highly manual work. Further, there is no ability to audit when (e.g. the date and time) and where (e.g. the actual location) the data was collected. Some existing inspection systems create drawings of the construction site (e.g. as vector images) and provide options to an inspector to annotate the vector drawings of the construction site. However, the process of rendering of the vector drawings during annotation in these existing inspection systems consumes more time, due to which the user device consumes more power, and requires internet access at every instant during processing.

Therefore, in light of the foregoing discussion, there exists a need to overcome the aforementioned drawbacks in existing approaches by facilitating an inspection process of a site by comparing a drawing of a given site with the site, to generate an inspection report.

SUMMARY

The present disclosure seeks to provide a method for facilitating an inspection process that involves comparing a construction drawing of a given site and said site. The method comprises the steps of: converting a vector graphic version of the construction drawing to a first set of raster images using a first accuracy; converting the vector graphic version of the construction drawing to a second set of raster images using a second accuracy, which second accuracy is higher than the first accuracy; dividing the first set of raster images to a first set of tiled sub-images; dividing the second set of raster images to a second set of tiled sub-images; receiving the first set of tiled sub-image and the second set of tiled sub-images by a user terminal; rendering at least one tiled sub-image, of the first set of tiled sub-images, on the user terminal; upon request to zoom the at least one tiled sub-image by a zoom rate exceeding a pre-defined threshold, rendering at least one tiled sub-image of the second set of tiled sub-images, corresponding to said at least one tiled sub-image of the first set of tiled sub-images, on the user terminal; upon request to annotate a given coordinate of a tiled sub-image, saving the annotation and its coordinate at the user terminal; and generating an inspection report comprising the annotation and its coordinate.

The present disclosure also seeks to provide a system for facilitating an inspection process that involves comparing a construction drawing of a given site and said site. The system comprises a server, and a user terminal. The server comprises communication means configured to: convert a vector graphic version of the construction drawing to a first set of raster images using a first accuracy; convert the vector graphic version of the construction drawing to a second set of raster images using a second accuracy, which second accuracy is higher than the first accuracy; divide the first set of raster images to a first set of tiled sub-images; divide the second set of raster images to a second set of tiled sub-images. The user terminal comprises communication means and being configured to: receive the first set of tiled sub-image and the second set of tiled sub-images; render at least one tiled sub-image, of the first set of tiled sub-images; upon request to zoom the at least one tiled sub-image by a zoom rate exceeding a pre-defined threshold, render at least one tiled sub-image of the second set of tiled sub-images, corresponding to said at least one tiled sub-image of the first set of tiled sub-images; and upon request to annotate a given coordinate of a tiled sub-image, save the annotation and its coordinate, wherein at least one of the server and the user terminal is configured to generate an inspection report comprising the annotation and its coordinate.

Embodiments of the present disclosure substantially eliminate or at least partially address the aforementioned problems in the prior art, and facilitate an inspection process that involves comparing a construction drawing of a given site and the site and generate an inspection report comprising the annotation and its coordination for each of tiled sub-images associated with the construction drawing.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1 is a schematic illustration of a system in accordance with an embodiment of the present disclosure;

FIG. 2 is a functional block diagram of a server in accordance with an embodiment of the present disclosure;

FIG. 3 is a functional block diagram of a user terminal in accordance with an embodiment of the present disclosure;

FIG. 4 illustrates a process of converting a vector graphic version of a construction drawing into raster images in accordance with an embodiment of the present disclosure;

FIG. 5 is an exemplary view of a visualization of rendering of sub-images at a user terminal in accordance with an embodiment of the present disclosure;

FIGS. 6A-6C are flow diagrams that illustrate a method for facilitating an inspection process in accordance with an embodiment of the present disclosure; and

FIG. 7 illustrates a schematic diagram of a computer architecture in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. For examples, embodiments may be created using software, or using a FPGA(s), or by using an ASIC(s).

The present disclosure seeks to provide a method for facilitating an inspection process that involves comparing a construction drawing of a given site and the site. The method comprises the steps of: converting a vector graphic version of the construction drawing to a first set of raster images using a first accuracy; converting the vector graphic version of the construction drawing to a second set of raster images using a second accuracy, which second accuracy is higher than the first accuracy; dividing the first set of raster images to a first set of tiled sub-images; dividing the second set of raster images to a second set of tiled sub-images; receiving the first set of tiled sub-images and the second set of tiled sub-images by a user terminal; rendering at least one tiled sub-image, of the first set of tiled sub-images, on the user terminal; upon request to zoom the at least one tiled sub-image by a zoom rate exceeding a pre-defined threshold, rendering at least one tiled sub-image of the second set of tiled sub-images, corresponding to the at least one tiled sub-image of the first set of tiled sub-images, on the user terminal; upon request to annotate a given coordinate of a tiled sub-image, saving the annotation and its coordinate at the user terminal; and generating an inspection report comprising the annotation and its coordinate.

The method of facilitating an inspection process helps an inspector to render tiled sub-images (e.g. a first set of tiled sub-images, a second set of tiled sub-images) associated with a vector graphic version of a construction drawing in a faster way at the user terminal and perform inspection by making annotations on the tiled sub-images with the user terminal. The method may save processing power of the user terminal due to faster rendering of the tiled sub-images while zooming into a next level, thereby also saving energy (i.e. increase battery life) of the user terminal. The method of facilitating the inspection process may generate an automated annotation of the vector graphic version of the construction drawing without use of a pen and a paper. In an embodiment, the method is performed offline as all necessary information for inspection is stored in the user terminal.

The method of rendering the tiled sub-images of raster images is faster when compared to rendering the graphic version of the construction drawing. The method may save display memory of the user terminal as it renders visible only tiled sub-images. The method of facilitating an inspection process may render tiled sub-images associated with a vector graphic version of a construction drawing automatically, based on a position of an inspector at a construction site associated with the construction drawings. This step may use a positioning system of the user terminal.

The annotation on the tiled sub-images may be transferred to other beneficiaries (e.g. engineers, contractors, etc.) automatically when the user terminal comes online after the inspection process. In an embodiment, the annotation on the tiled sub-images is directly converted into a portable document format (e.g. an Adobe® portable document format). In another embodiment, the annotation on the tiled sub-images comprises proper coordinates that may be added as another layer to the vector graphic version of the construction drawing.

In an embodiment, the vector graphic version of the construction drawing is converted to a third set of raster images using a third accuracy. The third set of raster images may be divided into a third set of tiled sub-images. The vector graphic version of the construction drawing may be converted to "n" set of raster images using "N" accuracy, then the "n" set of raster images may be divided into "N" set of tiled sub-images. In an embodiment, the third set of raster images or the "N" set of tiled sub-images is received by the user terminal. The raster images may be recomposed from the tiled sub-images at the user terminal dynamically (e.g. only active or visible tiled sub-images are rendered simultaneously at the user terminal). In an embodiment, the user terminal may be a desktop, a mobile phone, a smart phone, a tablet, a personal computer, or an electronic notebook, etc.

According to an embodiment, the inspection report comprises at least one of a text, a drawing, a photograph, a video, a sound recording and a measurement result. According to another embodiment, the measurement result originates from a separate sensor device. In an embodiment, the measurement result comprises humidity of a site that is obtained using for example a humidity sensor. In another embodiment, the measurement result comprises a temperature of a site that is obtained using a temperature sensor. In yet another embodiment, the measurement result comprises electric charge, or an electrical potential difference of electrical components in a site that is obtained using an electrometer sensor, for example. In yet another embodiment, the measurement result comprises details of a cable under a site that is obtained using a cable detector. In yet another embodiment, the measurement result comprises details of light energy in a site that is obtained using a light sensor.

According to yet another embodiment, the conversion parameters are selected based on technical characteristics of the user terminal. The conversion parameters may be a zoom level, a size, rasterization parameters, line colours, and/or inversion of the vector graphic version of the construction drawing.

According to yet another embodiment, the selection of the at least one tiled sub-image, of the first set of tiled sub-images, to be rendered on the user terminal, is performed using location information of the user terminal. According to yet another embodiment, the location information of the user terminal is obtained from a positioning system of the user terminal. The positioning system, such as a global positioning system (GPS) may be used to select the tiled sub-image from the group of tiled sub-images. The global positioning system may be used to obtain the location information of the user terminal. When the location information of the user terminal is not available, a zero zoom level of the tiled sub-images may be rendered. The zoom level of the tiled sub-images may be selected according to the location information of the user terminal when the location information of the user terminal is available. In an embodiment, the method provides options to an inspector to mark a position (e.g. a tiled sub-image) on raster images associated with a vector graphic version of a construction drawing to annotate/enter a note.

In an embodiment, the location information of the user terminal is determined with known methods, for example satellite positioning, triangulation or trilateration (e.g. Bluetooth beacons, Observed Time Difference of Arrival - 3G Long Term Evolution for positioning indoor location system). For example, the user terminal may display the raster images that comprise an extent of 10 meters positioned when the location information of the user terminal is measured in meters. A centre of the raster image that is displayed at the user terminal may be at an observed location of the user terminal. In an embodiment, location coordinates of the construction drawings need to be initialized first (e.g. by mapping the construction drawing coordinates to the construction site coordinates).

According to yet another embodiment, the site is a building construction site, a ship construction site, a road construction site or a landscape construction site. According to yet another embodiment, the construction drawing is an architectural construction drawing, an electrical drawing, a structural drawing or a heat-ventilation-air conditioning drawing.

According to yet another embodiment, the method of facilitating the inspection process may further comprise updating the vector graphic version of the construction drawing based on the inspection report. The method of updating the inspection report with the vector graphic version of the construction drawing may generate a to do-list for construction workers for upcoming tasks.

The present disclosure seeks to provide a system for facilitating an inspection process that involves comparing a construction drawing of a given site and the site. The system comprises a server, and a user terminal. The server comprises communication means and being configured to convert a vector graphic version of the construction drawing to a first set of raster images using a first accuracy, convert the vector graphic version of the construction drawing to a second set of raster images using a second accuracy, which second accuracy is higher than the first accuracy, divide the first set of raster images to a first set of tiled sub-images, and divide the second set of raster images to a second set of tiled sub-images. The user terminal comprises communication means configured to receive the first set of tiled sub-images and the second set of tiled sub-images, render at least one tiled sub-image, of the first set of tiled sub-images, upon request to zoom the at least one tiled sub-image by a zoom rate exceeding a pre-defined threshold, render at least one tiled sub-image of the second set of tiled sub-images, corresponding to the at least one tiled sub-image of the first set of tiled sub-images, and upon request to annotate a given coordinate of a tiled sub-image, save the annotation and its coordinate, wherein at least one of the server and the user terminal is configured to generate an inspection report comprising the annotation and its coordinate.

The system may convert annotations on the tiled sub-images into a portable document format (e.g., an Adobe portable document format). In an embodiment, the system adds annotations on tiled sub-images as a layer to a vector graphic version of a construction drawing. The system may save display memory of the user terminal as it renders only visible tiled sub-images.

In an embodiment, the user terminal selects a vector graphic version of a construction drawing based on a type and properties of the user terminal. For example, suitable parameters for the user terminal (e.g. a tablet such as an iPad) for selecting a vector graphic version of a construction drawing for conversion process may comprise 96 dots per inch initial conversion accuracy, a 2000*2000 pixels size of an individual raster image (e.g. tiling parameter), no colour alteration, 1.33 zooming factor between zoom levels, and no colour conversion.

In an embodiment, the server comprises a raster image converting module, and a raster image dividing module to generate an inspection report for a construction drawing. The raster image converting module may convert a vector graphic version of the construction drawing to a first set of raster images using a first accuracy. The raster image converting module may further convert the vector graphic version of the construction drawing to a second set of raster images using a second accuracy. In an embodiment, the second accuracy is higher than the first accuracy. The raster image dividing module may divide the first set of raster images to a first set of tiled sub-images. The raster image dividing module may further divide the second set of raster images to a second set of tiled sub-images. The server may comprise a server database that stores source drawings (e.g. a vector graphic version of a construction drawing), and raster images (i.e. a Portable Network Graphics, or Joint Photographic Experts Group of the vector graphic version of the construction drawing). The server database may also store relevant drawings for a construction site/field (e.g. mechanical drawings and electrical drawings, etc.). The construction drawings for building and vessels may be typically provided in International Standardization and Organization sizes (e.g. ISO 216).

The server may partially comprise the above modules to generate an inspection report for a construction drawing. The server may be a tablet, a desktop, a smart phone, a personal computer, an electronic notebook, a mobile communication device, an augmented reality device or a virtual reality device. In an embodiment, the user terminal comprises at least one of a raster image converting module, and/or a raster image dividing module to generate an inspection report for a construction drawing.

In an embodiment, the user terminal comprises a tiled sub-image receiving module, a tiled sub-image rendering module, and an annotation module to generate an inspection report for a construction drawing. The tiled sub-image receiving module may receive the first set of tiled sub-images and the second set of tiled sub-images. The tiled sub-image rendering module may render at least one tiled sub-image of the first set of tiled sub-images. The tiled sub-image rendering module may render the at least one tiled sub-image of the second set of tiled sub-images corresponding to the at least one tiled sub-image of the first set of tiled sub-images when a request to zoom the at least one tiled sub-image by a zoom rate exceeding a pre-defined threshold.

The annotation module may save the annotation of a tiled sub-image and its coordinate when a request to annotate a given coordinate of the tiled sub-image is received. The user terminal may comprise a terminal database that stores the annotation and its coordinate of the tiled sub-images.

In an embodiment, the server comprises at least one of a tiled sub-image receiving module, a tiled sub-image rendering module, and/or an annotation module to generate an inspection report for a construction drawing. The system may comprise more than one server that may comprise one or more of the above modules. In an embodiment, the server and the user terminal are configured to generate an inspection report that comprises the annotation and its coordinate of tiled sub-images associated with a vector graphics version of a construction drawing. In another embodiment, the server partially generates the inspection report. In yet another embodiment, the user terminal partially generates the inspection report.

In an embodiment, the user terminal supports fast zoom rendering of the construction drawings. For example, the user terminal comprises typical touch controlled hardware that provides an option for a rectangular viewport to be zoomed in and out of the construction drawings. The user terminal may receive multi-touch gestures, such as pinch-to-zoom to zoom the raster images to a next level. In another embodiment, the user terminal is configured to use fast zooming until a zoom factor is reached. The user terminal may choose the tiled sub-images from the next zoom level and render it appropriately.

According to an embodiment, the user terminal is at least one of a tablet, a mobile communication device, an augmented reality device or a virtual reality device. According to another embodiment, the user terminal comprises at least one of a camera, a sound recording device and a positioning system. The camera may be used to capture an image of a construction site.

According to yet another embodiment, the system further comprises at least one sensor device communicatively coupled to the server and/or the user terminal. According to yet another embodiment, the sensor device is at least one of a humidity sensor, a cable detector, a temperature sensor, a light sensor and an electrometer, as has been discussed above.

In an example embodiment, when a user (e.g. an inspector of a site) inspects electrical installations of a large vessel at a construction site, a vector graphic version of a construction drawing that comprises the details electrical installations of the large vessel is provided to the user. The construction drawings may be supplied in an Autocad drawing format (e.g., autocadDWG) and stored in a server. The user (e.g. an inspector of a construction site) may interact with a user terminal to select a vector graphic version of a construction drawing to inspect. The user terminal then communicates the vector graphic version of the construction drawing to a server using a communication means. The communication means may be a satellite communication, a Wireless-Fidelity communication, a Bluetooth communication, a Zigbee communication, an Infrared communication, a microwave communication, etc. The server converts the vector graphic version of the construction drawing to a set of raster images. The server divides the set of raster images into a set of tiled sub-images, and communicates the set of tiled sub-images to the user terminal. The user who travels to the construction site may interact with the user terminal to inspect and make annotations on the set of tiled sub-images associated with the vector graphic version of the construction drawing.

In an embodiment, the annotation is a text, a voice, a photo, dictation using a camera, and/or a microphone of the user terminal. In another embodiment, a user interface of the user terminal is configured to allow the user to select a position in the set of raster images (e.g. a first set of raster images or a second set of raster images) to provide details of annotations or comments associated with the selected position. In another embodiment, the user terminal monitors which parts of an area of inspection the user traverses when electronic positioning is available.

The user terminal may generate an inspection report that comprises location specific annotations and electronically (e.g. a Global Positioning System) acquired time stamped routes when a user (e.g. an inspector of a construction site) completes the inspection process. In an embodiment, a motion sensing circuit that is communicatively coupled to the user terminal is used to verify whether the inspection is carried out by a user or not. In another embodiment, the user terminal communicates the inspection report to the server when the internet connection is available.

The embodiments of the present description can take the form of an entirely hardware embodiment, an entirely software embodiment or an embodiment including both hardware and software elements. The embodiments that are implemented in software comprise but are not limited to firmware, resident software, microcode, etc. Furthermore, the embodiments herein can take the form of a computer program product accessible from a computer-usable or computer-readable medium providing program code for use by or in connection with a computer or any instruction execution system. For the purposes of this description, a computer-usable or computer readable medium can be any apparatus that can comprise, store, communicate, propagate or transport the program for use by or in connection with the instruction execution system, apparatus or device.

The medium can be an electronic, magnetic, optical, electromagnetic, infrared or semiconductor system (or apparatus or device) or a propagation medium. Examples of a computer-readable medium comprise a semiconductor or solid-state memory, magnetic tape, a removable computer diskette, a random access memory (RAM), a read-only memory (ROM), a rigid magnetic disk and an optical disk. Current examples of optical disks comprise a compact disk - read only memory (CD-ROM), a compact disk - read/write (CD-R/W) and a digital versatile disc (DVD).

A data processing system suitable for storing and/or executing a program code may comprise at least one processor coupled directly or indirectly to memory elements through a system bus. The memory elements can include local memory employed during actual execution of the program code, bulk storage and cache memories which provide temporary storage of at least some program code in order to reduce the number of times the code must be retrieved from the bulk storage during execution.

Input/output (I/O) devices (including but not limited to keyboards, displays, pointing devices, remote controls etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

Embodiments of the present disclosure may be used to facilitate an inspection process that involves comparing a construction drawing of a given site and the site. For example the embodiments can be used to automatically generate an inspection report that comprising an annotation and its coordination for the construction drawing and automatically transfers the inspection report to beneficiaries.

DETAILED DESCRIPTION OF THE DRAWINGS

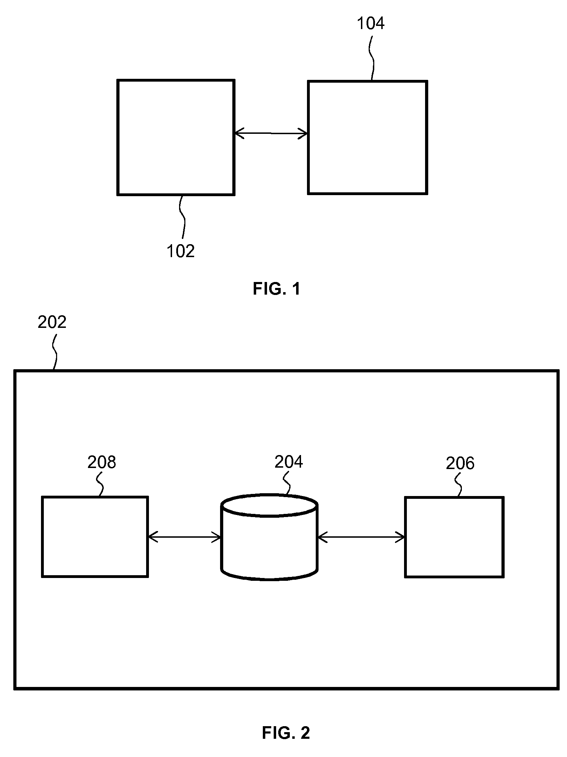

FIG. 1 is a schematic illustration of a system in accordance with an embodiment of the present disclosure. The system comprises a user terminal 102, and a server 104 to facilitate an inspection process that involves comparing a vector graphic version of a construction drawing of a given site with the site. The user terminal 102 that comprises communication means retrieves the vector graphic version of the construction drawing and communicates it to the server 104 through the communication means. The user terminal 102 may provide options to a user (e.g. an inspector of a construction site) to create the vector graphic version of the construction drawing. The server 104 that comprises communication means is configured to convert the vector graphic version of the construction drawing to a first set of raster images using a first accuracy. The server 104 converts the vector graphic version of the construction drawing to a second set of raster images using a second accuracy. The server 104 divides the first set of raster images to a first set of tiled sub-images, and the second set of raster images to a second set of tiled sub-images. The user terminal 102 is configured to receive the first set of tiled sub-images and the second set of tiled sub-images through the communication means. The user terminal 102 renders at least one tiled sub-image of the first set of tiled sub-images. The user terminal 102 renders at least one tiled sub-image of the second set of tiled sub-images corresponding to the at least one tiled sub-image of the first set of tiled sub-images when a request to zoom the at least one tiled sub-image by a zoom rate exceeding a pre-defined threshold. The user terminal 102 saves the annotation of a tiled sub-image and its coordinate when a request to annotate a given coordinate of the tiled sub-image is received. The user terminal 102, and/or the server 104 may generate an inspection report that comprises the annotation and its coordinate of the tiled sub-image.

Referring to FIG. 2, illustrated is a functional block diagram of a server 202 in accordance with an embodiment of the present disclosure. The functional block diagram of the server 202 comprises a server database 204, a raster image converting module 206, and a raster image dividing module 208. These modules function as has been described above.

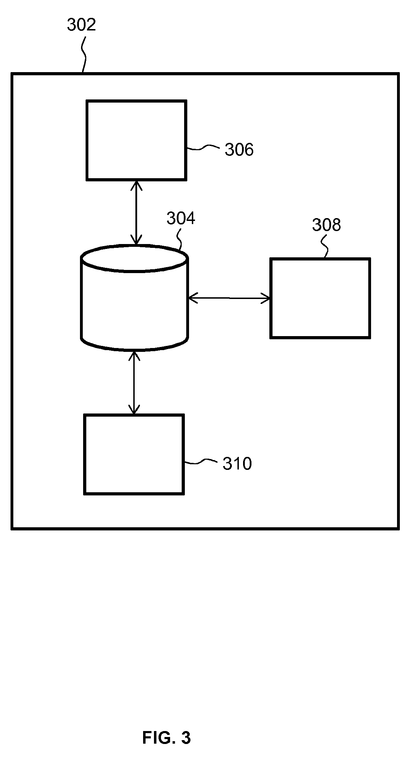

Referring to FIG. 3, illustrated is a functional block diagram of a user terminal 302 in accordance with an embodiment of the present disclosure. The functional block diagram of the user terminal 302 comprises a terminal database 304, a tiled sub-image receiving module 306, a tiled sub-image rendering module 308, and an annotation module 310. These modules function as has been described above.

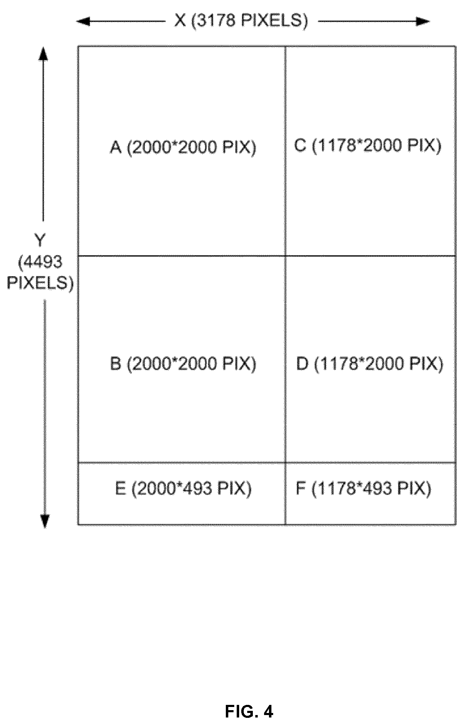

Referring to FIG. 4, illustrated is a process of converting a vector graphic version of a construction drawing into raster images in accordance with an embodiment of the present disclosure. The vector graphic version of the construction drawing may be orientated vertically at zero zoom level and converted into a first set of raster images. The first set of raster image may be portable network graphics files (PNG), joint photographic expert group (JPEG) files, etc. The first set of raster images may be divided into a first set of tiled sub-images, which are then converted as raster image files.

For example, a resolution (e.g. a first accuracy) of the vector graphic version of the construction drawing at zero zoom level may be 96 dots per inch (DPI). The vector graphic version of the construction drawing is converted into a first set of raster images with a pixel size of 3178*4493 pixels, which is then divided into six tiled sub-images (e.g. a first set of tiled sub-images) as shown in FIG. 4. A Width of the first set of raster images is configured in an X-dimension. A Height of the first set of raster images is configured in a Y-dimension. The first set of raster images that comprises a width of 3178 pixels is truncated with 2000 pixels as a first tiled sub-image, and the remaining width of 1178 pixels is truncated as a second tiled sub-image. The first set of raster images that comprises a height of 4493 pixels is truncated with 2000 pixels as a first tiled sub-image, another 2000 pixels as a second tiled sub-image, and the remaining height of 493 pixels is truncated as a third tiled sub-image. The truncation of the first set of raster images at zero zoom level as described above results in the formation of six tiled sub-images A, B, C, D, E, and F, which are then converted as raster image files. The tiled sub-images A and B may comprise a pixel size of 2000*2000 pixels. The tiled sub-images C and D may comprise a pixel size of 1178*2000 pixels. The tiled sub-image E may comprise a pixel size of 2000*493 pixels. The tiled sub-image F may comprise a pixel size of 1178*493 pixels.

For a first zoom level, the resolution of the vector graphic version of the construction drawing is multiplied with 1.33 (e.g. zooming factor) i.e. 96*1.33 = 128 dots per inch (e.g. a second accuracy). The vector graphic version of the construction drawing comprises 128 dots per inch is converted into a second set of raster image with a pixel size of (1.33*3178)*(1.33*4493) pixels, i.e., 4226*5975 pixels, which is again divided into a second set of tiled sub-images as described above and converted as raster image files. The conversion process may be continued for subsequent zoom levels until the conversion accuracy is sufficient, for example 400 dots per inch.

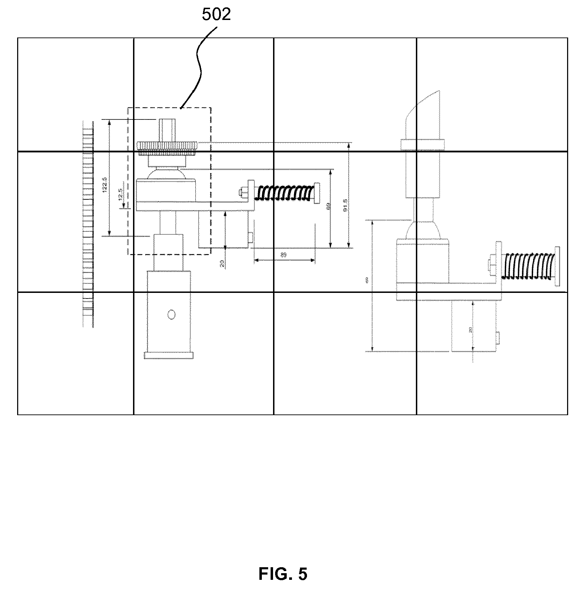

Referring to FIG. 5, illustrated is an exemplary view of visualization of rendering of sub-images at a user terminal in accordance with an embodiment of the present disclosure. The exemplary view comprises a display frame 502 that represents a display of a user terminal, and tiled sub-images (e.g. twelve tiled sub-images as shown in FIG. 5) on a zoom level (e.g. a zero zoom level, or a first zoom level, etc.). The display frame 502 displays active tiled sub-images (e.g. 4 tiled sub-images within the display frame 502 as shown in FIG. 5). The user terminal may store the active tiled sub-images at a display memory for faster rendering of tiled sub-images.

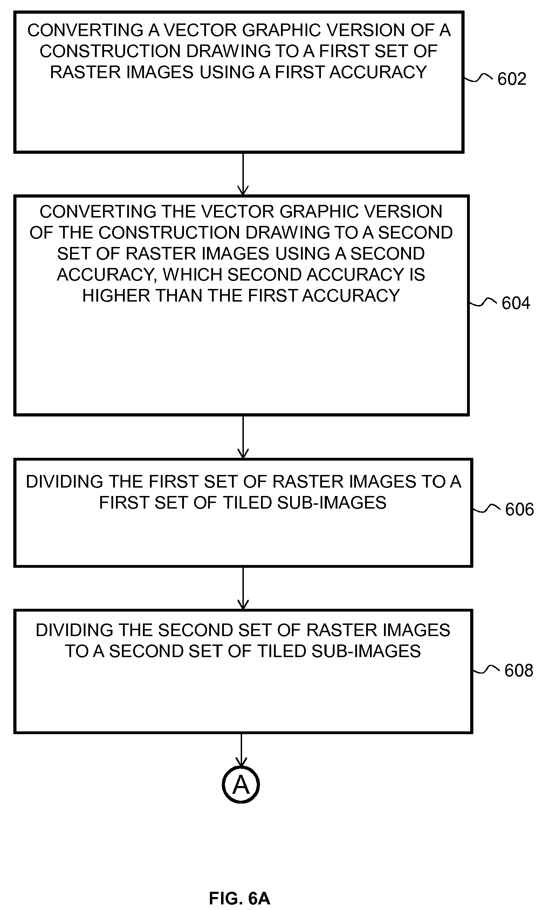

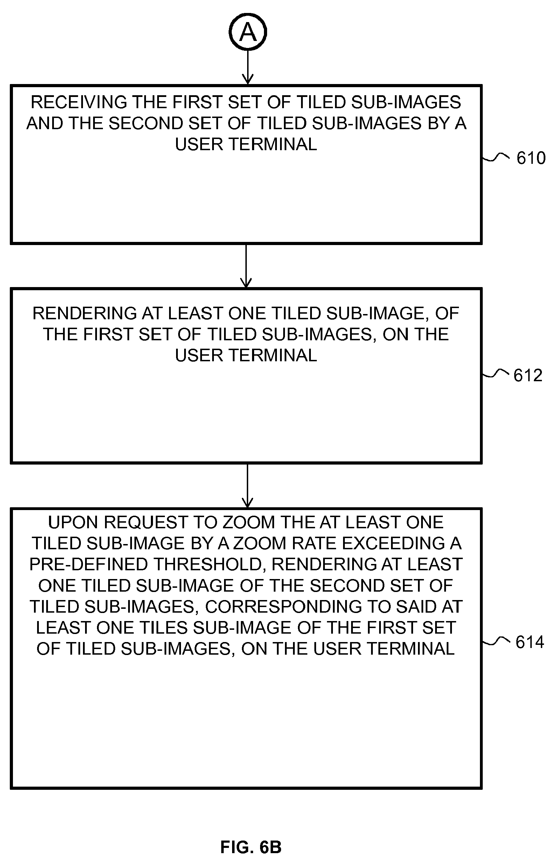

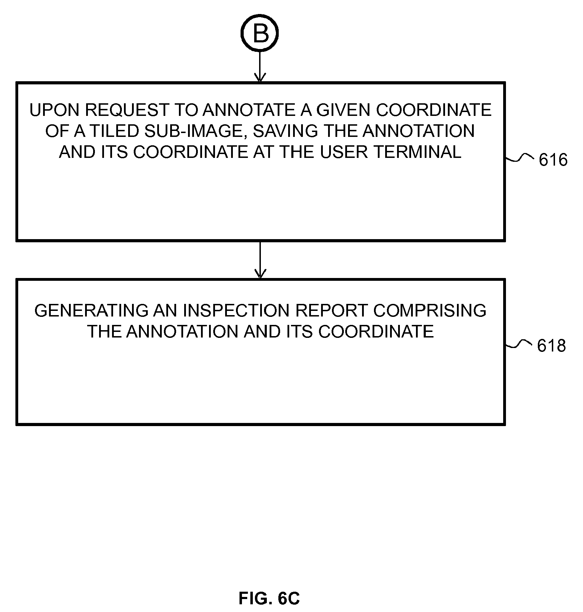

FIGS. 6A-6C are flow diagrams that illustrate a method for facilitating an inspection process in accordance with an embodiment of the present disclosure. At step 602, a vector graphic version of a construction drawing is converted to a first set of raster images using a first accuracy. At step 604, the vector graphic version of the construction drawing is converted to a second set of raster images using a second accuracy. The second accuracy is higher than the first accuracy. At step 606, the first set of raster images is divided to a first set of tiled sub-images. At step 608, the second set of raster images is divided to a second set of tiled sub-images. At step 610, the first set of tiled sub-images and the second set of tiled sub-images are received by a user terminal. At step 612, at least one tiled sub-image of the first set of tiled sub-images is rendered on the user terminal. At step 614, at least one tiled sub-image of the second set of tiled sub-images corresponding to the at least one tiled sub-image of the first set of tiled sub-images is rendered when a request to zoom the at least one tiled sub-image by a zoom rate exceeding a predefined threshold. At step 616, the annotation of a tiled sub-image and its coordinate are saved when a request to annotate a given coordinate of the tiled sub-image is received. At step 618, an inspection report that comprises the annotation and its coordinate for the tiled sub-images associated the vector graphic version of the construction drawings is generated.

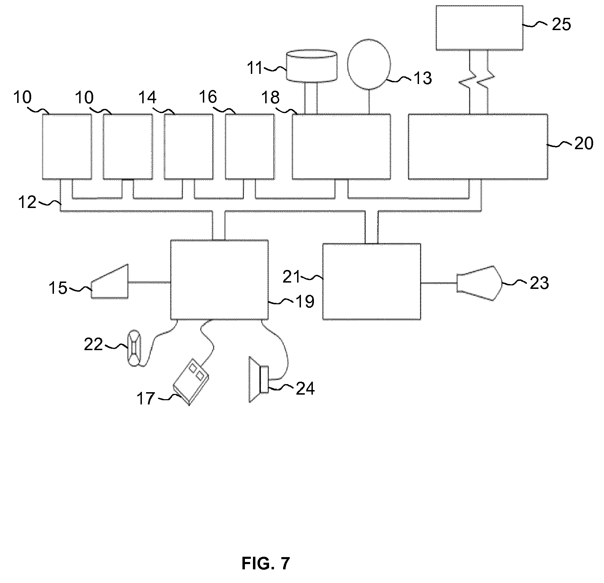

A representative hardware environment for practicing the embodiments herein is depicted in FIG. 7. This schematic drawing illustrates a hardware configuration of a computer architecture/system used to implement a server, or a user terminal in accordance with an embodiment of the present disclosure. The system comprises at least one processor or central processing unit (CPU) 10. The CPUs 10 are interconnected via system bus 12 to various devices such as a random access memory (RAM) 14, read-only memory (ROM) 16, and an input/output (I/O) adapter 18. The I/O adapter 18 can connect to peripheral devices, such as disk units 11 and tape drives 13, or other program storage devices that are readable by the system. The system can read the inventive instructions on the program storage devices and follow these instructions to execute the methodology of the embodiments herein.

The system further comprises a user interface adapter 19 that connects a keyboard 15, mouse 17, speaker 24, microphone 22, and/or other user interface devices such as a touch screen device (not shown) or a remote control to the bus 12 to gather user input. Additionally, a communication adapter 20 connects the bus 12 to a data processing network 25, and a display adapter 21 connects the bus 12 to a display device 23 which may be embodied as an output device such as a monitor, printer, or transmitter, for example.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

EXAMPLES

Annotation Process

Example: 1

A user terminal provides options to a user (e.g. an inspector of a construction site) to mark a position for annotation (e.g. a text, a voice, a photo, graphics overlaid on top of the drawing etc.) on raster images associated with a vector graphic version of a construction drawing. A coordinate of the marked position may be mapped to a real position on the vector graphic version of the construction drawing by calculating from known real centre coordinate of a display of the user terminal, zoom ratio (z), and a display related to distance vector from the touch coordinate to display centre.

For example, a first zoom level of raster images associated with the vector graphic version of the construction drawing may be rendered on a display of the user terminal. The raster images on the first zoom level may comprise six tiled sub-images (e.g. A to F). The display may be centred to coordinate 2000*2000 pixels. A zoom factor of hardware (e.g. a user terminal) may be two. A centre hardware coordinate of the display may be 500*500 pixels. In an embodiment, a square display touch coordinate on the display is 400*400 pixels when the display is centred to coordinate 1000*1000 pixels.

Distance vector of the first zoom level of raster images and the hardware zoom factor may be (-100, -100). To compensate the zoom factor of hardware, vector length of the first zoom level of raster images may be divided by the zoom factor of hardware (e.g. zoom factor of hardware is 2) to yield a vector (-50, -50). Thus, the coordinate of the marked position for the first zoom level of raster images is 1950*1950 pixels. The zoom factor between the two subsequent zoom levels may be 1.33 pixels more than previous zoom level in X, and Y directions. Therefore, the coordinate of the marked position may be divided by 1.33 zoom factor which yields 1466*1466 pixels, which is then the real marking coordinate for zero zoom level of the raster images.

The annotation on the tiled sub-images may be calculated as

$$x\_real=(x\_touch-x\_dcenter)/hw\_zoom/zoom\_ratio^{zoom\_level}+x\_center$$

where,

X_real - x coordinate of the marking position,

x_touch - x coordinate of the mark on the display,

hw_zoom - hardware zoom factor of the user terminal (retrieved from the user terminal graphics Application Programming Interface),

zoom_ratio - zooming factor (e.g., typically 1.33) between zoom levels,

zoom_level - zoom level of the tiled sub-images on the display

x_center - x_coordinate of the point where x_dcenter maps in the zero zoom level of the raster image,

X_dcenter - x coordinate of the display (window) center.

In an embodiment, the x_center may be calculated using a panning parameter that is acquired from the user terminal graphics Application Programming Interface (API), and a tiling parameter that is acquired from respective tiled sub-image index.

## Claims

1. A method for facilitating an inspection process, the inspection process involving comparing a construction drawing of a given site and said site, the method comprising

   - converting a vector graphic version of the construction drawing to a first set of raster images using a first accuracy,
   - converting the vector graphic version of the construction drawing to a second set of raster images using a second accuracy, which second accuracy is higher than the first accuracy,
   - dividing the first set of raster images to a first set of tiled sub-images,
   - dividing the second set of raster images to a second set of tiled sub-images,
   - receiving the first set of tiled sub-images and the second set of tiled sub-images by a user terminal,
   - rendering at least one tiled sub-image, of the first set of tiled sub-images, on the user terminal,
   - upon request to zoom the at least one tiled sub-image by a zoom rate exceeding a pre-defined threshold, rendering at least one tiled sub-image of the second set of tiled sub-images, corresponding to said at least one tiled sub-image of the first set of tiled sub-images, on the user terminal,
   - upon request to annotate a given coordinate of a tiled sub-image, saving the annotation and its coordinate at the user terminal, and
   - generating an inspection report comprising the annotation and its coordinate.

2. A method according to claim 1, wherein the inspection report comprises at least one of a text, a drawing, a photograph, a video, a sound recording and a measurement result.

3. A method according to claim 2, wherein the measurement result originates from a separate sensor device.

4. A method according to any of the preceding claims, wherein conversion parameters are selected based on technical characteristics of the user terminal.

5. A method according to any of the preceding claims, wherein selection of the at least one tiled sub-image, of the first set of tiled sub-images, to be rendered on the user terminal, is performed using location information of the user terminal.

6. A method according to claim 5, wherein the location information of the user terminal is obtained from a positioning system of the user terminal.

7. A method according to any of the preceding claims, wherein the site is a building construction site, a ship construction site, a road construction site or a landscape construction site.

8. A method according to any of the preceding claims, wherein the construction drawing is an architectural construction drawing, an electrical drawing, a structural drawing or a heat-ventilation-air conditioning drawing.

9. A method according to any of the preceding claims, further comprising updating the vector graphic version of the construction drawing based on the inspection report.

10. A system for facilitating an inspection process, the inspection process involving comparing a construction drawing of a given site and said site, the system comprising

    - a server comprising communication means and being configured to

        - convert a vector graphic version of the construction drawing to a first set of raster images using a first accuracy,
        - convert the vector graphic version of the construction drawing to a second set of raster images using a second accuracy, which second accuracy is higher than the first accuracy,
        - divide the first set of raster images to a first set of tiled sub-images, and
        - divide the second set of raster images to a second set of tiled sub-images, and

    - a user terminal comprising communication means and being configured to

        - receive the first set of tiled sub-images and the second set of tiled sub-images,
        - render at least one tiled sub-image, of the first set of tiled sub-images,
        - upon request to zoom the at least one tiled sub-image by a zoom rate exceeding a pre-defined threshold, render at least one tiled sub-image of the second set of tiled sub-images, corresponding to said at least one tiled sub-image of the first set of tiled sub-images, and
        - upon request to annotate a given coordinate of a tiled sub-image, save the annotation and its coordinate,

wherein at least one of the server and the user terminal is configured to generate an inspection report comprising the annotation and its coordinate.

11. A system according to claim 10, wherein the user terminal is one of a tablet, a mobile communication device, an augmented reality device or a virtual reality device.

12. A system according to claim 10 or 11, wherein the user terminal comprises at least one of a camera, a sound recording device and a positioning system.

13. A system according to any of the claims 10-12, wherein the system further comprises at least one sensor device communicatively coupled to the server and/or the user terminal.

14. A system according to claim 13, wherein the sensor device is at least one of a humidity sensor, a cable detector, a temperature sensor, a light sensor and an electrometer.

**Amended claims in accordance with Rule 137(2) EPC.**

1. A method for facilitating an inspection process, the method comprising

    - converting a vector graphic version of the construction drawing to a first set of raster images using a first accuracy,

- converting the vector graphic version of the construction drawing to a second set of raster images using a second accuracy, which second accuracy is higher than the first accuracy,
- dividing the first set of raster images to a first set of tiled sub-images,
- dividing the second set of raster images to a second set of tiled sub-images,
- receiving the first set of tiled sub-images and the second set of tiled sub-images by a user terminal (102, 302),
- rendering at least one tiled sub-image, of the first set of tiled sub-images, on the user terminal, and
- upon request to annotate a given coordinate of a tiled sub-image, saving the annotation and its coordinate at the user terminal,

**characterised in that**
the inspection process involves comparing a construction drawing of a given site and said site, and the method further comprises

- upon request to zoom the at least one tiled sub-image by a zoom rate exceeding a pre-defined threshold, rendering at least one tiled sub-image of the second set of tiled sub-images, corresponding to said at least one tiled sub-image of the first set of tiled sub-images, on the user terminal, and
- generating an inspection report comprising the annotation and its coordinate.

2.  A method according to claim 1, wherein the inspection report comprises at least one of a text, a drawing, a photograph, a video, a sound recording and a measurement result.

3.  A method according to claim 2, wherein the measurement result originates from a separate sensor device.

4.  A method according to any of the preceding claims, wherein conversion parameters are selected based on technical characteristics of the user terminal (102, 302) and are selected from zoom level, a size, rasterization parameters, line colours, and/or inversion of the vector graphic version of the construction drawing.

5.  A method according to any of the preceding claims, wherein selection of the at least one tiled sub-image, of the first set of tiled sub-images, to be rendered on the user terminal (102, 302), is performed using location information of the user terminal.

6.  A method according to claim 5, wherein the location information of the user terminal (102, 302) is obtained from a positioning system of the user terminal.

7.  A method according to any of the preceding claims, wherein the site is a building construction site, a ship construction site, a road construction site or a landscape construction site.

8.  A method according to any of the preceding claims, wherein the construction drawing is an architectural construction drawing, an electrical drawing, a structural drawing or a heat-ventilation-air conditioning drawing.

9.  A system for facilitating an inspection process, the system comprising

- a server (104, 202) comprising communication means and being configured to

- convert a vector graphic version of the construction drawing to a first set of raster images using a first accuracy,
- convert the vector graphic version of the construction drawing to a second set of raster images using a second accuracy, which second accuracy is higher than the first accuracy,
- divide the first set of raster images to a first set of tiled sub-images, and
- divide the second set of raster images to a second set of tiled sub-images, and

- a user terminal (102, 302) comprising communication means and being configured to

- receive the first set of tiled sub-images and the second set of tiled sub-images,
- render at least one tiled sub-image, of the first set of tiled sub-images,
- upon request to annotate a given coordinate of a tiled sub-image, save the annotation and its coordinate,

**characterised in that**

- the inspection process involving comparing a construction drawing of a given site and said site,
- the user terminal comprising communication means is further configured to upon request to zoom the at least one tiled sub-image by a zoom rate exceeding a pre-defined threshold, render at least one tiled sub-image of the second set of tiled sub-images, corresponding to said at least one tiled sub-image of the first set of tiled sub-images, and

wherein at least one of the server and the user terminal is configured to generate an inspection report comprising the annotation and its coordinate.

10. A system according to claim 9, wherein the user terminal (102) is one of a tablet, a mobile communication device, an augmented reality device or a virtual reality device.

11. A system according to claim 9 or 10, wherein the user terminal (102, 302) comprises at least one of a camera, a sound recording device and a positioning system.

12. A system according to any of the claims 9-11, wherein the system further comprises at least one sensor device communicatively coupled to the server (104, 202) and/or the user terminal (102, 302).

13. A system according to claim 12, wherein the sensor device is at least one of a humidity sensor, a cable detector, a temperature sensor, a light sensor and an electrometer.

**FIG. 1**

**FIG. 2**

FIG. 3

X (3178 PIXELS)

Y (4493 PIXELS)

| A (2000*2000 PIX) | C (1178*2000 PIX) |
| B (2000*2000 PIX) | D (1178*2000 PIX) |
| E (2000*493 PIX) | F (1178*493 PIX) |

**FIG. 4**

502

**FIG. 5**

CONVERTING A VECTOR GRAPHIC VERSION OF A CONSTRUCTION DRAWING TO A FIRST SET OF RASTER IMAGES USING A FIRST ACCURACY ⟋ 602

CONVERTING THE VECTOR GRAPHIC VERSION OF THE CONSTRUCTION DRAWING TO A SECOND SET OF RASTER IMAGES USING A SECOND ACCURACY, WHICH SECOND ACCURACY IS HIGHER THAN THE FIRST ACCURACY ⟋ 604

DIVIDING THE FIRST SET OF RASTER IMAGES TO A FIRST SET OF TILED SUB-IMAGES ⟋ 606

DIVIDING THE SECOND SET OF RASTER IMAGES TO A SECOND SET OF TILED SUB-IMAGES ⟋ 608

(A)

FIG. 6A

(A)

RECEIVING THE FIRST SET OF TILED SUB-IMAGES AND THE SECOND SET OF TILED SUB-IMAGES BY A USER TERMINAL — 610

RENDERING AT LEAST ONE TILED SUB-IMAGE, OF THE FIRST SET OF TILED SUB-IMAGES, ON THE USER TERMINAL — 612

UPON REQUEST TO ZOOM THE AT LEAST ONE TILED SUB-IMAGE BY A ZOOM RATE EXCEEDING A PRE-DEFINED THRESHOLD, RENDERING AT LEAST ONE TILED SUB-IMAGE OF THE SECOND SET OF TILED SUB-IMAGES, CORRESPONDING TO SAID AT LEAST ONE TILES SUB-IMAGE OF THE FIRST SET OF TILED SUB-IMAGES, ON THE USER TERMINAL — 614

**FIG. 6B**

B

UPON REQUEST TO ANNOTATE A GIVEN COORDINATE
OF A TILED SUB-IMAGE, SAVING THE ANNOTATION
AND ITS COORDINATE AT THE USER TERMINAL
~ 616

GENERATING AN INSPECTION REPORT COMPRISING
THE ANNOTATION AND ITS COORDINATE
~ 618

**FIG. 6C**

FIG. 7

**Europäisches Patentamt**

**European Patent Office**

**Office européen des brevets**

# EUROPEAN SEARCH REPORT

Application Number

EP 16 18 3230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/034601 A1 (ROTHBERG JONATHAN SCOTT [US] ET AL) 4 February 2016 (2016-02-04) * paragraphs [0006] - [0013], [0039], [0053] - [0062]; claims 1, 6, 7; figures 4A-4C, 5, 6 * | 1-14 | INV. G06F3/0488 H04L29/08 G06F17/24 G06F3/0481 G06F17/50 |
| A | WO 2009/017940 A2 (MICROSOFT CORP [US]) 5 February 2009 (2009-02-05) * paragraphs [0003] - [0005], [0031], [0037] - [0039]; figures 2, 5 * | 1-14 | G06F3/0484 G06T9/00 |
| X | US 2015/169791 A1 (LAVROV ANDREI [US] ET AL) 18 June 2015 (2015-06-18) * paragraphs [0009] - [0015], [0027] - [0041] * | 1-14 | |
| A | US 2012/116728 A1 (SHEAR ROBERT MATTHEW [US] ET AL) 10 May 2012 (2012-05-10) * paragraphs [0064] - [0110]; figures 2-8 * | 1-14 | |

TECHNICAL FIELDS SEARCHED (IPC)

G06F
H04L
G06T

The present search report has been drawn up for all claims

| Place of search | Date of completion of the search | Examiner |
|---|---|---|
| Munich | 10 January 2017 | Sollazzo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 3230

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2017

| Patent document cited in search report | Publication date | Patent family member(s) | Publication date |
|---|---|---|---|
| US 2016034601 A1 | 04-02-2016 | US 2016034601 A1<br>WO 2016018604 A1 | 04-02-2016<br>04-02-2016 |
| WO 2009017940 A2 | 05-02-2009 | TW 200910258 A<br>US 2009037441 A1<br>WO 2009017940 A2 | 01-03-2009<br>05-02-2009<br>05-02-2009 |
| US 2015169791 A1 | 18-06-2015 | AU 2014365836 A1<br>CA 2934254 A1<br>EP 3084650 A1<br>US 2015169791 A1<br>WO 2015095141 A1 | 07-07-2016<br>25-06-2015<br>26-10-2016<br>18-06-2015<br>25-06-2015 |
| US 2012116728 A1 | 10-05-2012 | NONE | |

EPO FORM P0459

For more details about this annex : see Official Journal of the European Patent Office, No. 12/82